# EUROPEAN PATENT APPLICATION

(11) **EP 1 239 693 A2**
(43) Date of publication of application: **11.09.2002**
(21) Application number: 01303220.6
(22) Date of filing: 05.04.2001
(51) Int. Cl.: H04Q 11/00

(54) **Optical supervisory channel**

(30) Priority: 05.03.2001 US 800106 P
(71) Applicant: Redfern Broadband Networks Pty Ltd, Eveleigh, New South Wales 1430 (AU); Redfern Broadband Networks Inc., Wilmington, County of Newcastle, Delaware (US)
(72) Inventor: Funk, David, Berowra Heights, New SOuth Wales 2082 (AU)
(74) Representative: Hallybone, Huw George

(57) **Abstract**

An optical network comprising a network management station, at least one source network element associated with the network management station, and at least one destination network element, wherein the source network element comprises a source proxy for sending an OSC signal in the form of IP datagrams to the destination network element under the control of the management station, the source proxy being arranged in a manner such that, in use, it sends duplicate IP datagrams along two different optical paths to the destination network element, and wherein the destination network element comprises a destination proxy arranged to pass one of the duplicate IP datagrams into the destination network element for processing and to filter out for disposal the other one.

## Description

### Field of the invention

The present invention relates broadly to an optical network, to a method of managing an optical network, and to a network element for use in an optical network.

### Background of the invention

There is a continuing demand for providing more and more user facilities in telecommunications equipment such as an optical network. Those facilities primarily relate to the management of the components within the optical network and the distribution and display of information such as alarm reports, audit logs, alarm logs, status reports and control messages.

The management network controls a channel wavelength called the optical supervisory channel (OSC) which may be transmitted over the network via the Internet protocol (IP). This OSC is usually an out-of -band wavelength, i.e. a wavelength outside the telecommunication wavelength band, which will get transmitted through all of the network elements.

Utilising standard IP routing, the OSC is transmitted unidirectionally in a network. Usually, a standard primary path is chosen for the OSC to follow from a source network element to a destination network element on the network. If a failure occurs in the network along the primary path, then the path of the OSC is interrupted, and as a result an IP time out will eventually occur, notifying the source network element of the interruption. To deal with such failure, the IP datagrams, i.e. the OSC, are re-routed along a secondary path from the source network element to the destination network element. However, this is a time consuming procedure due to the relatively long IP time outs, leaving the management of the network interrupted for an undesirably long period of time.

At least preferred embodiments of the present invention seek to provide an alternative network management system.

### Summary of the invention

In accordance with a first aspect of the present invention there is provided an optical network comprising a network management station, at least one source network element associated with the network management station, and at least one destination network element, wherein the source network element comprises a source proxy for sending an OSC signal in the form of IP datagrams to the destination network element under the control of the management station, the source proxy being arranged in a manner such that, in use, it sends duplicate IP datagrams along two different optical paths to the destination network element, and wherein the destination network element comprises a destination proxy arranged to pass one of the duplicate IP datagrams into the destination network element for processing and to filter out for disposal the other one.

Accordingly, if a failure occurs along one of the paths one of the duplicated OSC signals will still be received at the source network element for processing, without any downtime caused by IP timeouts.

The source proxy may be arranged in a manner such that, in use, the duplication of the IP datagrams is effected at an IP layer or at an Ethernet layer.

The management function may comprise the distribution of one or more of the group of alarm reports, audit logs, alarm logs, status reports and control messages.

In one embodiment, the optical network is arranged in a manner such that, in use, the management function is being effected via e-mail messages transmitted using the standard IP protocols.

Alternatively or additionally, the optical network may be arranged in a manner such that, in use, the management function is being effected via an HTTP server incorporated in the network element and accessible via a conventional web browser.

The network element may comprise a network node or an in-line amplifier.

Where the optical network is a ring network, the different paths of the duplicated OSC signal preferably comprise transmission paths along opposite directions of the ring network.

Where the optical network is a mesh network, the source proxy may be arranged in a manner such that, in use, it sends at least two identical IP datagrams along at least two different optical paths to the destination network element, and the destination network element comprises a destination proxy arranged to pass one of the IP datagrams into the network element for processing and to filter out for disposal the others.

Where the optical network comprises more than one destination network element, the destination network elements are preferably arranged in a manner such that the OSC is terminated and re-transmitted at each intermediate destination network element.

In a preferred embodiment, the source proxy may be arranged to be capable of also functioning as a destination proxy, and/or the destination proxy may be arranged to be capable of functioning as a source proxy.

In accordance with a second aspect of the present invention there is provided a method of managing an optical network comprising the steps of sending duplicate OSC signals in the form of IP datagrams along two different optical paths to a destination network element, and, at the destination network element, passing one of the duplicate IP datagrams into the destination network element for processing and filtering out for disposal the other one.

In accordance with a third aspect of the present invention there is provided a network element for use in an optical network, the optical network element comprising a source proxy for sending an OSC signal in the form of IP datagrams to a destination network element on the network under the control of a management station, the source proxy being arranged in a manner such that, in use, it sends duplicate IP datagrams along two different optical paths to the destination network element.

The network element may comprise a network node or an in-line amplifier.

The management station may be incorporated in the network element.

The network element may further comprise a destination proxy arranged, in use, to receive duplicate OSC signals from another network element in the form of IP datagrams, the destination proxy being arranged to pass one of the duplicate IP datagrams into the network element for processing and to filter out for disposal the other one.

In accordance with a fourth aspect of the present invention there is provided a network element for use in an optical network, the optical network element comprising a destination proxy arranged to receive duplicate OSC signals in the form of IP datagrams, the destination proxy being arranged to pass one of the duplicate IP datagrams into the network element for processing and to filter out for disposal the other one.

The network element may comprise a network node or an in-line amplifier.

### Brief description of the drawings

Preferred forms of the present invention will now be described, by way of example only, with reference to the accompanying drawings.

Figure 1 is a schematic diagram illustrating an optical network embodying the present invention.

Figure 2 is a schematic diagram illustrating another optical network embodying the present invention.

Figure 3 is an example screen shot illustrative of a management display screen embodying the present invention.

Figure 4 is a schematic diagram illustrating the functional modules of a metro hub embodying the present invention.

Figure 5 is a schematic diagram illustrating the connectivity of a management network embodying the present invention.

### Detailed description of the embodiments

The preferred embodiment described provides an optical network in which OSC signals in the form of IP datagrams are duplicated and then transmitted along the ring network in opposing direction simultaneously, thus providing a 1 + 1 protection mechanism for the OSC.

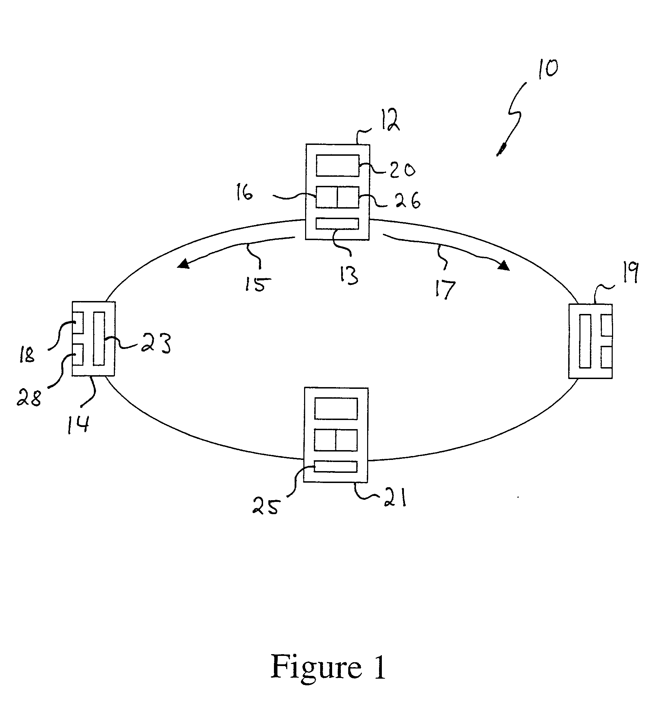

In figure 1, an optical network in the form of a ring network 10 comprises a plurality of network elements, including a network node 12 which interfaces to subscribers of the ring network 10, and an in-line amplifier unit 14.

The network node 12 and amplifier unit 14 each incorporate HTTP server application units 16, 18 respectively, which are accessible through a desktop PC-type interface 20 incorporated within the network node 12.

Accordingly, a user can monitor and control at least some of the functions and components incorporated in the node 12 and amplifier unit 14 utilising standard TCP/IP communication protocols. This avoids the need for implementing specialised tools within the ring network 10 for those monitoring and controlling functionalities.

The network node 12 and amplifier unit 14 further comprise email application units 26, 28 respectively. The email application units 26, 28 are arranged in a manner such that status reports on components incorporated in the network node 12 and amplifier unit 14 respectively are being emailed to the user (i.e. to PC-type interface 20), thereby e.g. alerting the user to failures in certain of those components. Again, the email messages are being communicated using standard TCP/IP protocols.

The network node 12 further comprises a proxy 13 through which all management traffic is interfaced onto an OSC on the ring network 10. The proxy 13 is arranged in a manner such that IP datagrams, i.e. a management signal destined for e.g. the amplifier unit 14, are duplicated and sent simultaneously around the ring network 10 in opposite directions as indicated by arrows 15 and 17 respectively.

The OSC is terminated and re-transmitted at each intermediate network element, rather than being amplified through in-line amplifiers. For example, the clock-wise transmitted duplicated OSC signal indicated by arrow 17 will be terminated and re-transmitted at amplifier unit 19 and network node 21 before being received at the amplifier unit 14.

The amplifier unit 14 comprises a proxy 23 arranged in a manner such that one of the duplicated OSC signal's is passed into the amplifier unit 14 for further processing, whereas the other one is filtered out for disposal. In the example shown in Figure 1, the management signal indicated by arrow 15 will under normal conditions be received at amplifier 14 prior to the other duplicated management signal 17, which would result in management signal 15 being passed into the amplifier unit 14 by the proxy 23 for further processing, whereas management signal 17 will be filtered out for disposal. However, it will be appreciated by a person skilled in the art that rather than determining which signal to pass or filter out only on a "first received" basis, the determination could also and/or additionally be based on a more complex analysis e.g. a "quality of signal"-type determination, which could favour one over the other due to losses or distortions experienced along the respective path.

Importantly, should a complete failure such as a fibre breakage occur along either of the paths, the other one will then always be passed into the amplifier unit 14 by the proxy 23 for further processing. Accordingly, the optical network configuration shown in Figure 1 avoids downtime in the management of the ring network 10 where a failure along one of the paths occurs, which would otherwise result in significant downtimes as a result of standard IP timeouts.

In the exemplary embodiment shown in Figure 1 the proxies 13 and 25 of the network nodes 12 and 21 respectively, are configured in a manner such that they can act as both source and destination proxies. In other words, management of the ring network 10 may be conducted from either network node 12 or 21, with the proxy of the other network node then performing a functionality similar to the functionality of proxy 23 of the amplifier unit 14.

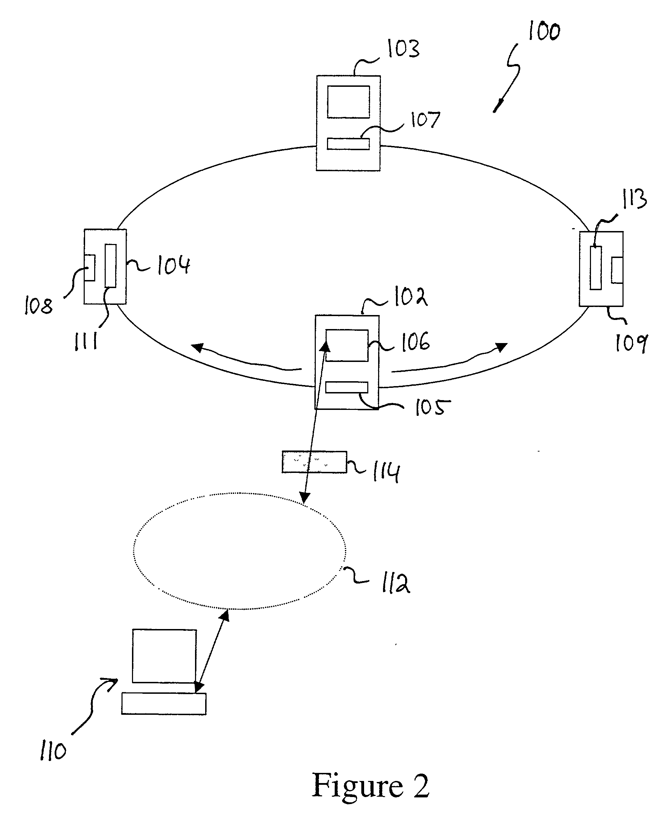

In another embodiment of the present invention shown in Figure 2 a ring network 100 comprises a plurality of network elements, including network nodes, e.g. 102 which interface to subscribers of the ring network 100, and in-line amplifier units e.g. 104.

Each of the network nodes e.g. 102 and amplifier units e.g. 104 incorporates HTTP server application units, e.g. 106, 108.

Management of the ring network 100 is implemented by utilising a management channel connecting all of the HTTP server application units e.g. 106, 108, using TCP/IP protocols for communication.

Each of the HTTP server application units e.g. 106, 108 have typical communication characteristics such as routing capability to pass-through communications directed to other HTTP server application units and to process communications intended for itself. Each HTTP server application unit is identifiable through a unique address within the TCP/IP protocol communication network.

Each of the network nodes 102, 103 incorporates a proxy 105, 107 respectively, of similar functionality to the proxies 13, 25 (Figure 1) described above. Each of the amplifier units 104, 109 incorporates a proxy 111, 113 respectively of similar functionality as the proxy 23 (Figure 1) described above.

In the embodiment shown in Figure 2 a remote management station 110 is provided for centralised management of the ring network 100. Since the management channel of the ring network 100 utilises TCP/IP protocols for communication, the management station 110 can be remotely connected to any one of the network elements of the ring network 100 through the Internet 112. In such an embodiment, suitable firewall protection 114 should be provided at the HTTP server application unit 106 incorporated within the network node 102 to which the management station 110 is connected in the embodiment shown in Figure 2. This ensures that the network is completely isolated from the publicly accessible Internet 112.

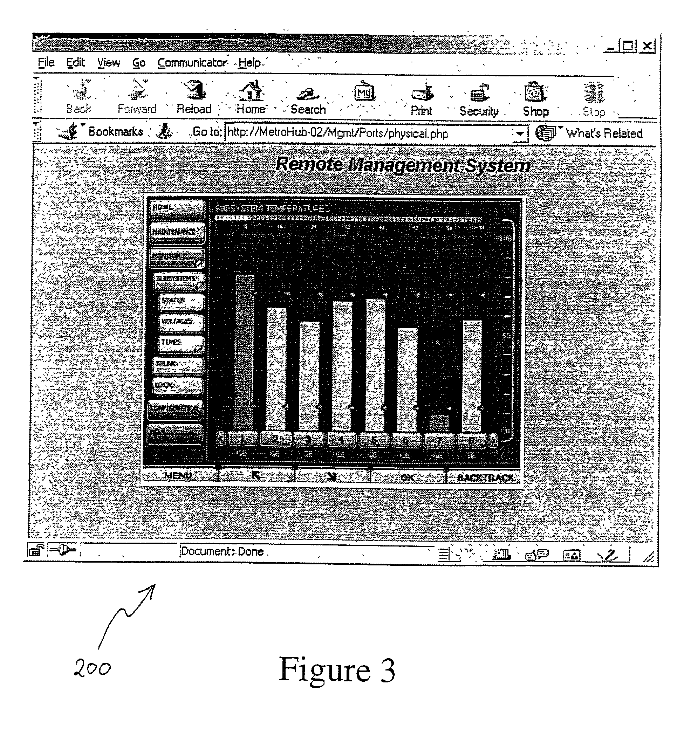

Figure 3 shows an example screen shot 200 illustrative of a management display screen presented to a user at the remote management station 110.

In the described embodiments, the optical ring network comprises a Management Network which overlays the physical and logical topology of the data communication network. The management network enables all Managed Network Elements within the network to be monitored and/or controlled from a Management Terminal.

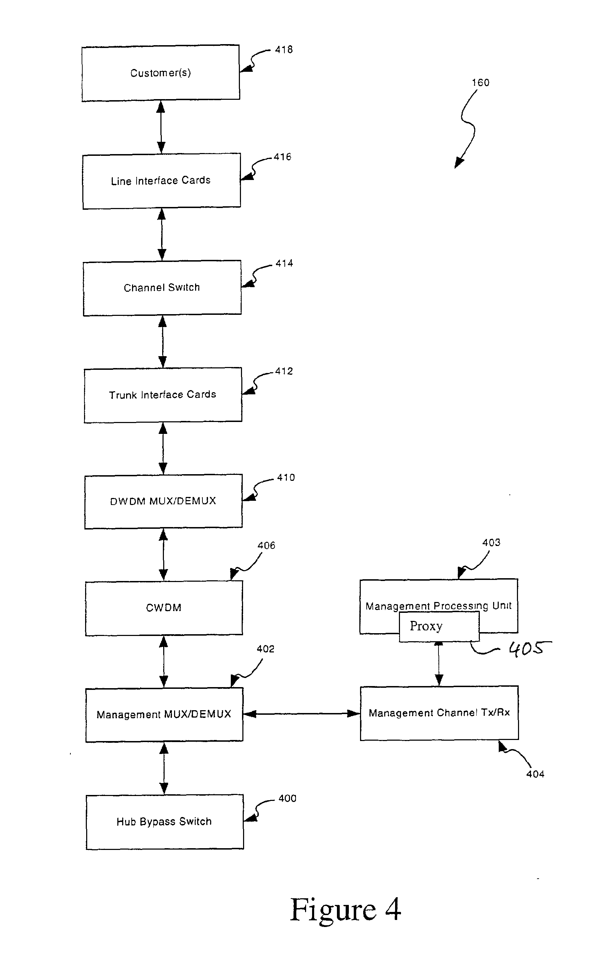

The Managed Network Elements may comprise e.g. a metro hub, a core hub or a line amplifier. Figure 4 shows a block diagram illustrating the various functional modules at e.g. a metro hub 160.

The metro hub comprises the following functional modules:
- a hub bypass switch connecting the metro hub 400 to the optical network (not shown);
- a management MUX/DEMUX unit 402 for extracting the OSC from the network traffic;
- a course wavelength division multiplexing (CWDM) unit 406 for course multiplexing/demultiplexing of optical data signals;
- a dense wavelength division multiplexing (DWDM) MUX/DEMUX unit 410 for dense multiplexing/demultiplexing of the data signals;
- a system of trunk interface cards 412, channel switch 414 and line interface cards 416 interfacing to customers (subscribers) 418 of the optical network;
- a management channel Tx/Rx unit 404 interfacing to a management processing unit 403; and
- a proxy 405 of the type of proxies 13, 23 (Figure 1) and 105, 107 (Figure 2) described above incorporated within the management processing unit 403.

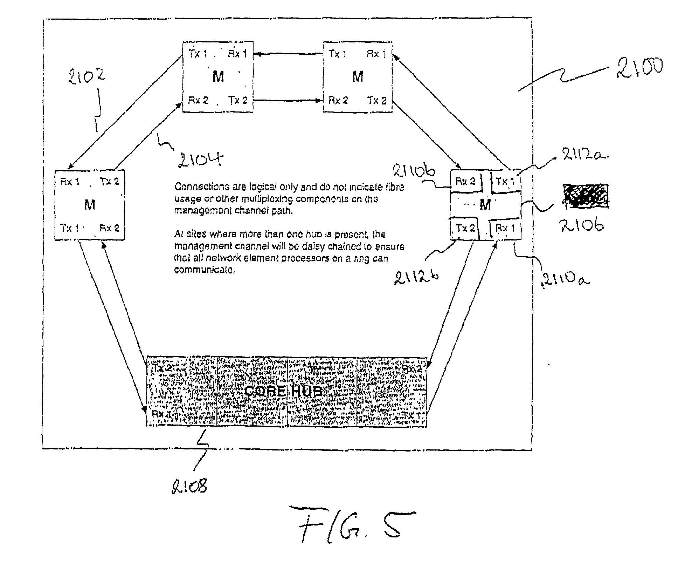

The logical connectivity of the Management Network 2100 is shown in Figure 5. The Management Network 2100 comprises two logical channels (importantly not necessarily on two physical optical connections) counter-propagating within the network. The use of two counter-propagating channels ensures that communication of management information between any pair of network elements is not interrupted in the case of any single failure such as e.g. a fibre break. Each counter-propagating channel consists of a set of point-to-point links, e.g. 2102, 2104, connecting adjacent Managed Network Elements, e.g. 2106. Thus each Managed Network Element 2106 comprises two management receivers 2110*a*, 2110*b* and two management transmitters 2112*a*, 2112*b*. Some terminal equipment, e.g. a Core Hub 2108, may contain multiple Managed Network Elements, in which case the connectivity between these elements is effected internally, and the terminal equipment still has only two sets of management transmitters and receivers.

Within each Managed Network Element, the management signals are multiplexed and demultiplexed with the data signals on each fibre by the Management MUX/DEMUX Units 402 (see Figure 4).

Advantageously, since the management channel connections e.g. 2102, 2104, are established between adjacent Managed Network Elements, they are fully regenerated at each Managed Network Element, and do not require optical amplification.

The management channel connections may comprise signals transmitted outside the gain bandwidth of conventional optical amplifiers, e.g. at a wavelength of around 1510 nm.

Advantageously, the two counter-propagating management signals 2102, 2104 in each link may be transmitted bi-directionally in the same fibre.

In order to avoid problems with backscattered or reflected light from one management signal, e.g. 2102, interfering with the counter-propagating management signal, e.g. 2104, the two management channels may be transmitted on different wavelengths, e.g. 1505 nm and 1515 nm.

The management channel may comprise relatively low bit-rate signals, e.g. around 100 Mb/s, so that dispersion and power budget for the management signals do not restrict the maximum distance between Managed Network Elements.

The transmission format of the management signals may comprise local-area network standards, e.g. full-duplex 100 Mb/s Fast Ethernet, so that the management channel connections may be implemented using low-cost commodity hardware.

Advantageously, the Management multiplexer/de-multiplexer (MUX/DEMUX) Units 402 (see Figure 4) should present minimal insertion loss to non-management channels, in order to maximise the power budget available for data signal transmission.

It will be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

In the claims that follow and in the summary of the invention, except where the context requires otherwise due to express language or necessary implication, the word "comprising" is used in the sense of "including", i.e. the feature specified may be associated with further features in various embodiments of the invention.

## Claims

1. An optical network comprising:
- a network management station,
- at least one source network element associated with the network management station, and
- at least one destination network element,
wherein the source network element comprises a source proxy for sending an OSC signal in the form of IP datagrams to the destination network element under the control of the management station, the source proxy being arranged in a manner such that, in use, it sends duplicate IP datagrams along two different optical paths to the destination network element, and
wherein the destination network element comprises a destination proxy arranged to pass one of the duplicate IP datagrams into the destination network element for processing and to filter out for disposal the other one.

2. An optical network as claimed in claim 1, wherein the source proxy is arranged in a manner such that, in use, the duplication of the IP datagrams is effected at an IP layer or at an Ethernet layer.

3. A network as claimed in claim 1, wherein the management function comprises the distribution of one or more of the group of alarm reports, audit logs, alarm logs, status reports and control messages.

4. A network as claimed in claim 1, wherein the optical network is arranged in a manner such that, in use, the management function is being effected via e-mail messages transmitted using the standard IP protocols.

5. A network as claimed in claim 1, wherein the optical network is arranged in a manner such that, in use, the management function is being effected via an HTTP server incorporated in the network element and accessible via a conventional web browser.

6. A network as claimed in claim 1, wherein the network element may comprise a network node or an in-line amplifier.

7. A network as claimed in claim 1, wherein the optical network is a ring network, and the different paths of the duplicated OSC signal comprise transmission paths along opposite directions of the ring network.

8. A network as claimed in claim 1, wherein the optical network is a mesh network. and the source proxy is arranged in a manner such that, in use, it sends at least two identical IP datagrams along at least two different optical paths to the destination network element, and the destination network element comprises a destination proxy arranged to pass one of the IP datagrams into the network element for processing and to filter out for disposal the others.

9. A network as claimed in claim 1, wherein the optical network comprises more than one destination network element, and the destination network elements are arranged in a manner such that the OSC is terminated and re-transmitted at each intermediate destination network element.

10. A network as claimed in claim 1, wherein the source proxy is arranged to be capable of also functioning as a destination proxy, and/or the destination proxy is arranged to be capable of functioning as a source proxy.

11. A method of managing an optical network comprising the steps of:
- sending duplicate OSC signals in the form of IP datagrams along two different optical paths to a destination network element, and
- at the destination network element, passing one of the duplicate IP datagrams into the destination network element for processing and filtering out for disposal the other one.

12. A network element for use in an optical network, the optical network element comprising:
- a source proxy for sending an OSC signal in the form of IP datagrams to a destination network element on the network under the control of a management station, the source proxy being arranged in a manner such that, in use, it sends duplicate IP datagrams along two different optical paths to the destination network element.

13. A network element as claimed in claim 12, wherein the network element further comprises a destination proxy arranged, in use, to receive duplicate OSC signals from another network element in the form of IP datagrams, the destination proxy being arranged to pass one of the duplicate IP datagrams into the network element for processing and to filter out for disposal the other one.

14. A network element as claimed in claim 12, wherein the network element comprises a network node or an in-line amplifier.

15. A network element as claimed in claim 12, wherein the management station is incorporated in the network element.

16. A network element for use in an optical network, the optical network element comprising:
- a destination proxy arranged receive duplicate OSC signals in the form of IP datagrams, the destination proxy further being arranged to pass one of the duplicate IP datagrams into the network element for processing and to filter out for disposal the other one.

17. A network element as claimed in claim 16, wherein the network element comprises a network node or an in-line amplifier.
